# EUROPEAN PATENT APPLICATION

(11) **EP 4 539 304 A1**
(43) Date of publication of application: **16.04.2025**
(21) Application number: 22945811.2
(22) Date of filing: 09.06.2022
(51) Int. Cl.: H02K 1/276

(54) **ROTARY ELECTRIC MACHINE**

(71) Applicant: Hitachi Astemo, Ltd., Ibaraki 312-8503 (JP)
(72) Inventor: OKAMOTO, Hiromitsu, Hitachinaka-shi, Ibaraki 312-8503 (JP); BABA, Yuichiro, Hitachinaka-shi, Ibaraki 312-8503 (JP); MIYAGI, Takuya, Hitachinaka-shi, Ibaraki 312-8503 (JP); NARUSHIMA, Hiroki, Hitachinaka-shi, Ibaraki 312-8503 (JP); YOSHIDA, Shota, Hitachinaka-shi, Ibaraki 312-8503 (JP)
(74) Representative: MERH-IP Matias Erny Reichl Hoffmann Patentanwälte PartG mbB
(86) International application number: PCT/JP2022/023237
(87) International publication number: WO 2023/238309

(57) **Abstract**

A rotary electric machine includes a rotor core having a plurality of magnet holes, and a plurality of magnets respectively inserted into the plurality of magnet holes. The magnet includes a pair of first layer magnets arranged in a V-shape and a pair of second layer magnets arranged in a V-shape on an inner diameter side of the first layer magnets, and the rotor core has a hole portion at a position that overlaps with a d-axis which is a magnetic pole center of the rotor core, the hole portion being between the first layer magnet and the second layer magnet.

## Description

### Technical Field

The present invention relates to a rotary electric machine.

### Background Art

In a rotary electric machine, stress of a rotor core, which is generated by a rotational centrifugal force of a rotor, varies depending on the shape of a magnet hole of the rotor core. Regarding the stress of the rotor core, from the viewpoint of reliability, the maximum main stress needs to be equal to or less than the material strength of the material amount of the rotor core. In addition, in the rotor, the torque is improved in a configuration of the magnet arranged in a double V-shape as compared with a configuration of the magnet arranged in a single V-shape, and thus, it is advantageous to adopt the latter in order to improve the performance, but the stress of the rotor core increases. Based on this, the rotor core is required to achieve both improvement in torque and response to stress.

PTL 1 below discloses a configuration of a permanent magnet motor in which a double V-shaped magnet is arranged and a hole is provided in a portion other than a magnet insertion portion to disperse stress of a rotor core, which is generated by a centrifugal force.

### Citation List

### Patent Literature

PTL 1: JP 2013-141393 A

### Summary of Invention

### Technical Problem

In the configuration disclosed in PTL 1, since there is a large hole in a d-axis portion between second layers, the magnet magnetic flux cannot be effectively used, and the performance of the motor is greatly adversely affected. In addition, the performance of the motor is deteriorated, and, at the same time, the strength is also problematic due to the stress of the rotor core caused by the rotational centrifugal force. Considering this, an object of the present invention is to provide a rotary electric machine that reduces stress without reducing torque and improves rotational strength.

### Solution to Problem

A rotary electric machine includes a rotor core having a plurality of magnet holes, and a plurality of magnets respectively inserted into the plurality of magnet holes. The magnet includes a pair of first layer magnets arranged in a V-shape and a pair of second layer magnets arranged in a V-shape on an inner diameter side of the first layer magnets, and the rotor core has a hole portion at a position that overlaps with a d-axis which is a magnetic pole center of the rotor core, the hole portion being between the first layer magnet and the second layer magnet.

### Advantageous Effects of Invention

According to the present invention, it is possible to provide a rotary electric machine that reduces stress without reducing torque and improves rotational strength.

### Brief Description of Drawings

[FIG. 1] FIG. 1 is an overall view of a rotary electric machine.
[FIG. 2] FIG. 2 is an explanatory view of a hole portion of a rotor of the rotary electric machine according to an embodiment of the present invention.
[FIG. 3] FIG. 3 is an explanatory view of a region defining a position of the hole portion in FIG. 2.
[FIG. 4] FIG. 4 is a first modification example.
[FIG. 5] FIG. 5 is a second modification example.
[FIG. 6] FIG. 6 is an explanatory view of a definition of the hole portion in FIG. 2.

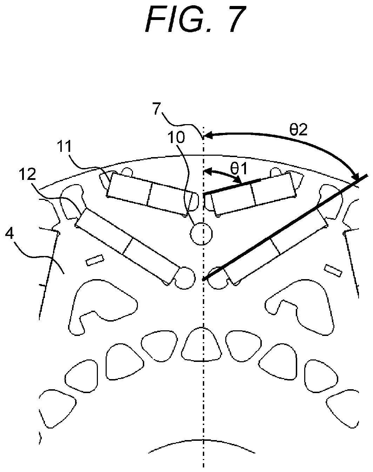

[FIG. 7] FIG. 7 is an explanatory view of a relationship between a d-axis and a magnet hole.

Hereinafter, an embodiment of the present invention will be described with reference to the drawings. The following description and drawings are examples for describing the present invention, and will be omitted and simplified as appropriate for the sake of clarity of description. The present invention can be carried out in various other forms. Unless otherwise specified, each component may be singular or plural.

Positions, sizes, shapes, ranges, and the like of components illustrated in the drawings may not represent actual positions, actual sizes, actual shapes, actual ranges, and the like in order to facilitate understanding of the invention. Therefore, the present invention is not necessarily limited to the positions, the sizes, the shapes, the ranges, and the like disclosed in the drawings.

### (One Embodiment and Overall Configuration of Present Invention)

### (FIG. 1)

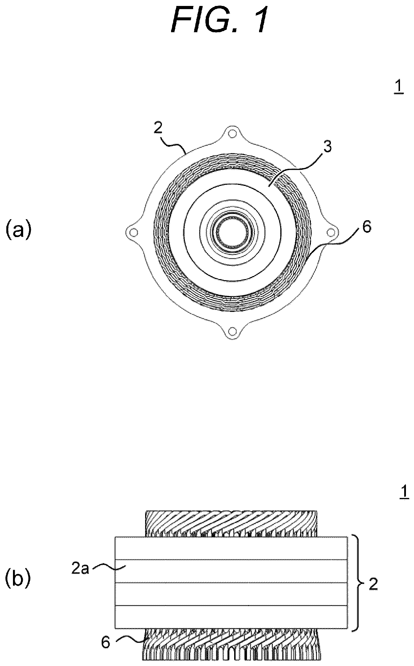

FIG. 1(a) is a view of a rotary electric machine as viewed from an axial direction. FIG. 1(b) is a view of FIG. 1(a) as viewed from a radial direction. A rotary electric machine 1 includes a stator 2 on an outer peripheral side and a rotor 3 on an inner peripheral side. The rotor 3 faces the stator 2 with a predetermined gap (not shown) interposed therebetween. A stator core 2a is an electromagnetic steel plate having a plurality of slots. A plurality of coils 6 are arranged side by side in the radial direction and inserted into the plurality of slots provided in the stator core 2a.

### (FIG. 2)

The rotor core 4 (referred to as a core 4 below) of the rotor 3 has a plurality of holes. Among the plurality of holes, magnet holes into which a plurality of magnets are respectively inserted include magnet holes into which a pair of first layer magnets 11 arranged in a V-shape are inserted, and magnet holes into which a pair of second layer magnets 12 arranged in a V-shape on an inner diameter side of the first layer magnets 11 are inserted.

The core 4 has a hole portion 10 at a position that overlaps with a d-axis 7, which is the magnetic pole center of the rotor core 4, between the first layer magnet 11 and the second layer magnet 12. The hole portion 10 is a hole for reducing stress. The hole portion 10 is not provided in a portion in which the density of the magnetic flux is high in the core 4, that is, on a flow path of the magnetic flux, and is provided at a position at which the magnetic performance is not affected.

### (FIG. 3)

The hole portion 10 is disposed in a region 8 formed by joining the corner on the innermost diameter side among the corners of the first layer magnets 11 and the corner closest to the d-axis 7 among the corners of the second layer magnets 12. As described above, by providing the hole portion 10 in the region 8 at the position that overlaps with the d-axis 7 between the first layer magnet hole and the second layer magnet hole, it is possible to disperse and reduce a load of stress related to the d-axis 7 on the inner side and the outer side of the core 4 in a well-balanced manner, so that it is possible to realize the stress reduction and the improvement of the rotational strength of the core 4.

Note that a plurality of hole portions 10 may be formed in the core 4 as long as a configuration in which the hole portions 10 are provided at positions that overlap with the d-axis 7 between the first layer magnet 11 and the second layer magnet 12, and the hole portions 10 are formed as voids is made.

### (First Modification Example)

### (FIG. 4)

A hole portion 10a includes a lower side that has a predetermined curvature and protrudes inward in the radial direction, and an upper side that has a curvature smaller than the predetermined curvature and protrudes outward in the radial direction. As described above, by adopting the hole portion 10a having different curvatures on the outer side and the inner side in the radial direction, it is possible to disperse the load in a well-balanced manner without affecting the magnetic performance, and to further the stress reduction and the improvement of the rotational strength of the core 4.

### (Second Modification Example)

### (FIG. 5)

A hole portion 10b includes a lower side that has a predetermined curvature and protrudes inward in the radial direction, and an upper side that has a curvature larger than the predetermined curvature and protrudes outward in the radial direction. By adopting the hole portion 10b having different curvatures on the outer side and the inner side in the radial direction as described above, it is possible to disperse the load in a well-balanced manner without affecting the magnetic performance, and to further the stress reduction and the improvement of the rotational strength of the core 4.

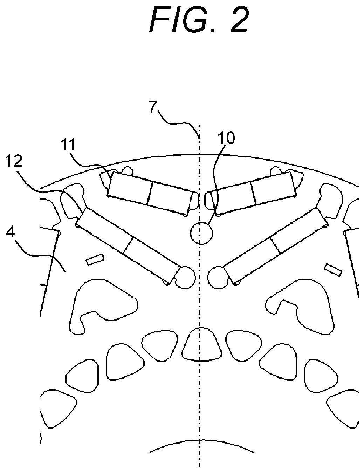

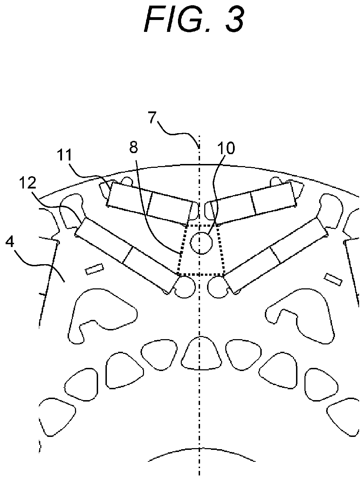

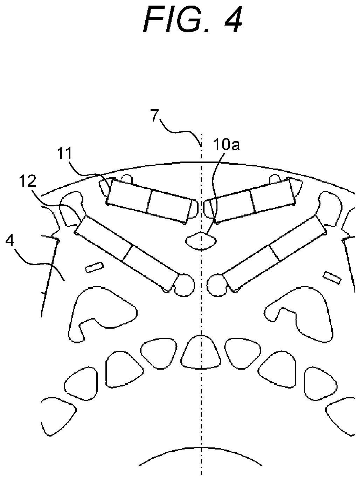

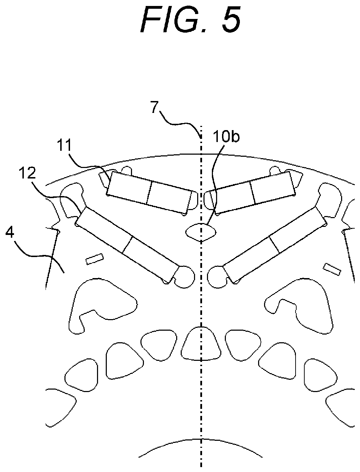

Note that the area of the hole portion 10 described with reference to FIGS. 2 and 3 is the same as the areas of the hole portions 10a and 10b described with reference to FIGS. 4 and 5. In addition, even if the hole portion 10 has a shape other than the hole portions 10a and 10b in the modification examples described above, the shape of the hole portion 10 does not need to be limited as long as the hole portion is provided at a place of the core 4 that does not affect the flow path of the magnetic flux and the size thereof does not affect the flow path of the magnetic flux.

### (FIG. 6)

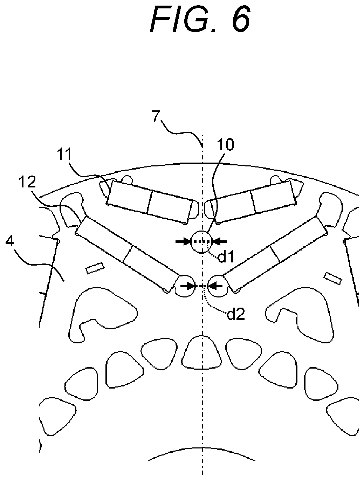

The maximum diameter dimension d1 of the hole portion 10 is larger than the bridge width d2 formed between a pair of magnet holes into which the second layer magnets 12 are respectively inserted. Note that FIG. 6 illustrates the maximum diameter dimension d1 in a direction perpendicular to the d-axis 7 in order to facilitate comparison of the width dimension. As a result, the load supported by a bridge portion crossing the d-axis 7 is reduced and deformation hardly occurs, so that it is possible to disperse the stress generated on the inner side of the core 4 in the radial direction to the outer side in the radial direction in a better-balanced manner.

### (FIG. 7)

A first angle θ1 formed by the first layer magnet 11 and the d-axis 7 is larger than a second angle θ2 formed by the second layer magnet 12 and the d-axis 7. With such a configuration, the effect of reducing the stress of the core 4 by the hole portion 10 provided between the first layer magnet 11 and the second layer magnet 12 is further increased.

Although the hole portion 10 of the present invention has been described above, since the first layer magnet 11 and the second layer magnet 12 generate heat simultaneously with the rotation of the core 4, a configuration in which cooling water flows through the hole portion 10 to promote cooling may be adopted.

According to the embodiment of the present invention described above, the following operational effects are obtained.
(1) The rotary electric machine 1 includes the rotor core 4 having a plurality of magnet holes, and a plurality of magnets respectively inserted into the plurality of magnet holes. The magnets include a pair of first layer magnets 11 arranged in a V-shape, and a pair of second layer magnets 12 arranged in a V-shape on an inner diameter side of the first layer magnets 11. The rotor core 4 has the hole portion 10 at a position that overlaps with the d-axis 7, which is the magnetic pole center of the rotor core 4, between the first layer magnet 11 and the second layer magnet 12. In this manner, it is possible to provide the rotary electric machine 1 that reduces stress without reducing torque and improves rotational strength.
(2) The hole portion 10 is disposed in the region 8 formed by joining the corner on the innermost diameter side among the corners of the first layer magnets 11 and the corner closest to the d7-axis among the corners of the second layer magnets 12**.** In this manner, it is possible to realize the stress reduction and the improvement of the rotational strength of the core 4.
(3) The hole portion 10a includes the lower side that has a predetermined curvature and protrudes inward in the radial direction, and the upper side that has a curvature smaller than the predetermined curvature and protrudes outward in the radial direction. In this manner, it is possible to further realize the stress reduction and the improvement of the rotational strength of the core 4.
(4) The hole portion 10b includes the lower side that has a predetermined curvature and protrudes inward in the radial direction, and the upper side that has a curvature larger than the predetermined curvature and protrudes outward in the radial direction. In this manner, it is possible to further realize the stress reduction and the improvement of the rotational strength of the core 4.
(5) The rotor core 4 has at least one hole portion 10 at the position that overlaps with the d-axis 7 between the first layer magnet 11 and the second layer magnet 12. The hole portion 10 is formed by at least one or more voids. In this manner, it is possible to further realize the stress reduction and the improvement of the rotational strength of the core 4.
(6) The maximum diameter dimension d1 of the hole portion 10 is larger than the bridge width d2 formed between a pair of magnet holes into which the second layer magnets 12 are respectively inserted. In this manner, it is possible to disperse the stress of the core 4 to the outer side in the radial direction in a well-balanced manner.
(7) The first angle θ1 formed by the first layer magnet 11 and the d-axis 7 is larger than the second angle θ2 formed by the second layer magnet 12 and the d-axis 7. In this manner, the effect of reducing the stress of the core 4 is further increased.

Note that the present invention is not limited to the above embodiment, and various modifications and other configurations can be combined without departing from the gist of the present invention. In addition, the present invention is not limited to one including all the configurations described in the above embodiment, and includes one in which a portion of the configuration is deleted.

### Reference Signs List

- 1: rotary electric machine
- 2: stator
- 3: rotor
- 4: rotor core
- 5: slot
- 6: coil
- 7: d-axis
- 8: region
- 10: hole portion
- 10a: hole portion in first modification example
- 10b: hole portion in second modification example
- 11: first layer magnet
- 12: second layer magnet
- d1: maximum diameter of hole portion
- d2: bridge width

## Claims

1. A rotary electric machine comprising:
a rotor core having a plurality of magnet holes; and
a plurality of magnets respectively inserted into the plurality of magnet holes,
wherein
the magnet includes a pair of first layer magnets arranged in a V-shape and a pair of second layer magnets arranged in a V-shape on an inner diameter side of the first layer magnets, and
the rotor core has a hole portion at a position that overlaps with a d-axis which is a magnetic pole center of the rotor core, the hole portion being between the first layer magnet and the second layer magnet.

2. The rotary electric machine according to claim 1, wherein the hole portion is disposed in a region formed by joining a corner on an innermost diameter side among corners of the first layer magnets and a corner closest to the **d-**axis among corners of the second layer magnets.

3. The rotary electric machine according to claim 1, wherein
the hole portion includes a lower side that has a predetermined curvature and protrudes inward in a radial direction, and
an upper side that has a curvature smaller than the predetermined curvature and protrudes outward in the radial direction.

4. The rotary electric machine according to claim 1, wherein
the hole portion includes a lower side that has a predetermined curvature and protrudes inward in a radial direction, and
an upper side that has a curvature larger than the predetermined curvature and protrudes outward in the radial direction.

5. The rotary electric machine according to claim 1, wherein
the rotor core includes at least one hole portion at a position that overlaps with the d-axis, the at least one hole portion being between the first layer magnet and the second layer magnet, and
the hole portion is formed by at least one or more voids.

6. The rotary electric machine according to claim 5, wherein a maximum diameter dimension of the hole portion is larger than a bridge width formed between a pair of magnet holes into which the second layer magnets are respectively inserted.

7. The rotary electric machine according to claim 5, wherein a first angle formed by the first layer magnet and the d-axis is larger than a second angle formed by the second layer magnet and the d-axis.
